# EUROPEAN PATENT SPECIFICATION

(11) **EP 4 089 225 B1**
(45) Date of publication and mention of the grant of the patent: **04.06.2025**
(21) Application number: 20912105.2
(22) Date of filing: 22.12.2020
(51) Int. Cl.: D06F 37/06, D06F 39/08

(54) **LAUNDRY LIFTING DEVICE FOR WASHING MACHINE, AND DRUM WASHING MACHINE**
WÄSCHEHEBEVORRICHTUNG FÜR WASCHMASCHINE UND TROMMELWASCHMASCHINE
DISPOSITIF DE LEVAGE DE LINGE POUR MACHINE À LAVER ET MACHINE À LAVER À TAMBOUR

(30) Priority: 09.01.2020 CN 202010021697
(43) Date of publication of application: 16.11.2022
(73) Proprietor: Qingdao Haier Drum Washing Machine Co., Ltd., Qingdao, Shandong 266101 (CN); HAIER SMART HOME CO., LTD., Laoshan District Qingdao Shandong 266101 (CN)
(72) Inventor: ZHAO, Zhiqiang, Qingdao, Shandong 266101 (CN); XU, Sheng, Qingdao, Shandong 266101 (CN)
(74) Representative: Beck & Rössig European Patent Attorneys
(86) International application number: PCT/CN2020/138184
(87) International publication number: WO 2021/139518

(56) References cited:
- WO-A1-2019/042343
- WO-A1-2019/165924
- CN-A- 106 939 490
- CN-A- 109 402 952
- CN-A- 110 195 314
- CN-A- 110 195 331
- CN-A- 110 195 333
- CN-U- 202 543 635
- CN-U- 205 856 868
- JP-A- 2005 006 767
- JP-A- 2011 078 483

## Description

The present invention relates to the technical field of laundry equipment, in particular to a clothes lifting device for a washing machine comprising the features of the preamble portion of claim 1 and further to a drum washing machine including said clothes lifting device.

As a most widely used household appliance in daily life of people, the washing machine helps people get rid of the trouble of washing clothes and brings great convenience to people. However, the washing machine has certain defects such as long time consumption and large water consumption, along with social development, water resources as important natural resources become more and more important, the water-saving awareness of people is improved, and how to realize the water-saving function of the washing machine is particularly important.

In order to solve the water-saving problem of the washing machine, some patents, such as a CN 104005201 B and named as a drum washing machine, are provided, the invention relates to a drum washing machine which includes a box body, an inner drum and an outer drum are arranged in the box body, a door seal is arranged between the outer drum and the box body, the inner drum is connected with a driving device. The inner drum is a hole-free inner drum, the inner drum is a conical drum with a small diameter at the drum bottom and a large diameter at the drum opening, the drum opening of the inner drum is folded inwards in an arc shape, a water inlet guide pipe is arranged on the door seal, one end of the water inlet guide pipe is connected with a washing water rapid heating device, and the other end of the water inlet guide pipe penetrates through the door seal and extends into the inner drum. A water outlet and a water pressure detection device are arranged on the outer drum. According to the technical solution, the inner drum is a hole-free inner drum, water feeding of the inner drum is achieved through the water inlet guide pipe arranged on the door seal, water drainage is achieved in the dewatering process through the shape of the inner drum, and therefore water can be prevented from being stored between the inner drum and the outer drum, and the washing water consumption is greatly reduced.

According to the drum washing machine with the hole-free inner drum, a water inlet mode of the drum washing machine is achieved through the door seal, the door seal is mainly used for achieving sealing of a drum opening of the outer drum of the washing machine, and the sealing effect of the door seal is easily affected and is not easy to achieve due to the fact that the water inlet guide pipe is arranged on the door seal; besides, drainage of the patent is mainly achieved through combination of a drum-shaped structure and high-speed driving of a driving device, the drum-shaped structure is complex, the drainage effect and the sealing effect of the inner drum cannot be guaranteed, and many problems exist in practical application.

Besides, how to solve the drainage problem of the drum washing machine in the washing process and the drainage problem of the drum washing machine in the dewatering process are major problems faced by hole-free inner drums, in CN 108866921 A and named as a drum washing machine, the description discloses "including an outer drum, the front end of the outer drum is fixed to the inner wall of a machine body, the inner drum is rotatably arranged in the outer drum, and a centrifugal valve is arranged on the side wall of the inner drum; during washing, the centrifugal valve is closed, water is contained in the inner drum, and no water exists between the inner drum and the outer drum; during dewatering, the centrifugal valve is opened, the washing water is discharged to the space between the inner drum and the outer drum and is discharged from the outer drum", the patent proposes to use the centrifugal valve to perform centrifugal drainage so as to solve the drainage problem of the hole-free drum washing machine, however, due to the fact that thread scraps are inevitably generated in the washing process, preventing the thread scraps from entering the centrifugal valve along with water flow is the precondition for ensuring normal work of the centrifugal valve, particularly, the centrifugal valve needs to be closed in the washing and rinsing stages of the drum washing machine, a spring is generally contained in the structure of the centrifugal valve, once the thread scraps are wound on the spring, the thread scraps are difficult to remove, and normal work of the spring is seriously influenced, the centrifugal valve cannot be closed in place. Therefore, the water-saving and self-cleaning effects of the hole-free inner drum cannot be realized.

A clothes lifting device for a washing machine comprising the features of the preamble portion of claim 1 is know from WO 2019/165924 A. The clothes lifting device comprises a lifting shell secured to an inner wall of a drum to thereby for an accommodation chamber for a centrifugal drainage assembly. Broad notches at the foot of the shell allow washing water to flow into the accommodation space.

Further clothes lifting devices are known from JP 2005 006767 A and WO 20219/042343 A1.

The object of the present invention is to improve working reliability of the centrifugal drainage assembly.

This technical problem is solved by a clothes lifting device according to claim 1 and a washing machine according to claim 10.

Advantageous embodiments are indicated in further claims.

The clothes lifting device of the disclosure can be installed on the inner wall of the inner drum of the drum washing machine, and in the clothes washing process, clothes are lifted to a certain height along with rotation of the inner drum to be beaten The centrifugal drainage assembly is integrally arranged in the clothes lifting device, the initial state of the centrifugal drainage assembly is the closed state, the inner drum is kept closed to independently contain washing water, and the centrifugal drainage assembly can be opened for drainage under the action of centrifugal force, so that drainage of the drum washing machine with the hole-free inner drum is achieved.

According to the drum washing machine, the inner drum door is installed on the drum opening of the inner drum, the hole-free drum design is adopted in the inner drum, the inner drum door and the inner drum jointly form the independent washing cavity, washing water is independently contained when clothes are washed, the space between the inner drum and the outer drum does not need to be filled with the washing/rinsing water, and the washing water consumption of the washing machine is greatly reduced; the possibility of dirt adhesion between the inner drum and the outer drum is avoided; the user health and the user experience are greatly improved, and water resources are greatly saved.

The accommodating chamber where the centrifugal drainage assembly is located becomes an area independent of the interior of the inner drum, the area is kept communicating with the inner drum through the water inlet filtering portion and can effectively filter the thread scraps, the centrifugal drainage assembly is located in an environment without the thread scraps or with few thread scraps, the possibility of attachment of the thread scraps is fundamentally avoided, and the working reliability of the centrifugal drainage assembly is effectively ensured.

In the drawings:
Fig. 1 is a principle schematic diagram of the drum washing machine in the embodiment of the disclosure;
Fig. 2 a three-dimensional structure schematic diagram of the clothes lifting device for the washing machine in embodiment 1 of the disclosure;
Fig. 3 is another three-dimensional structure schematic diagram of the clothes lifting device for the washing machine in embodiment 1 of the disclosure;
Fig. 4 is a front view of the clothes lifting device for the washing machine in embodiment 1 of the disclosure;
Fig. 5 is a section view along an A-A plane in the Fig. 4 of the clothes lifting device for the washing machine in embodiment 1 of the disclosure (an implementation mode);
Fig. 6 is a section view along an A-A plane in the Fig. 4 of the clothes lifting device for the washing machine in embodiment 1 of the disclosure (another implementation mode);
Fig. 7 is a section view along a B-B plane in the Fig. 4 of the clothes lifting device for the washing machine in embodiment 1 of the disclosure;
Fig. 8 is a principle schematic diagram of the drum washing machine in embodiment 2 of the disclosure.

The clothes lifting device for the washing machine and the drum washing machine are described in detail according to the following drawings.

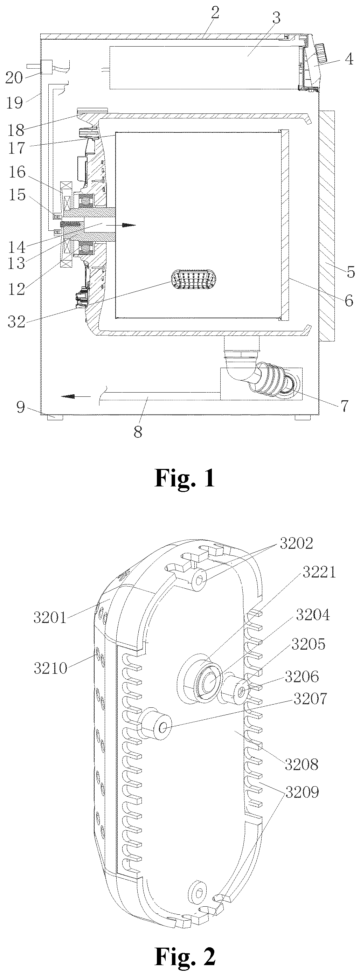

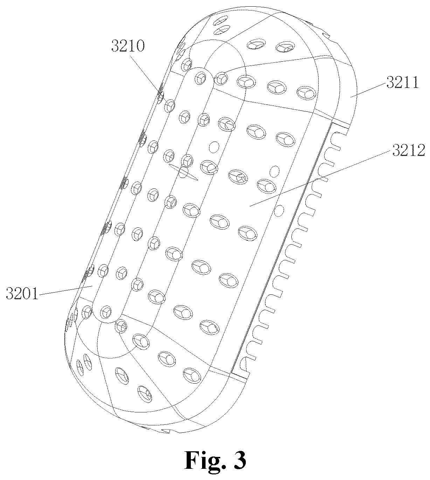

As shown in Fig. 1-Fig. 8, the drum washing machine with the hole-free inner drum of the front-open structure is simple in structure, and the space between the inner drum and the outer drum does not need to be filled with the washing/rinsing water, so that the washing water consumption of the washing machine is greatly reduced. The possibility of dirt adhesion between the inner drum and the outer drum is avoided. The user health and the user experience are greatly improved, and water resources are greatly saved.

The drum washing machine of the embodiment is provided with a housing 19. The housing 19 includes an upper deck plate 2, a front panel, a rear back plate and a bottom plate. Bottom feet 9 are fixedly installed on the bottom plate and used for supporting the whole washing machine. An outer drum 18 is arranged in the housing 19, and an inner drum 17 is coaxially arranged in the outer drum 18. The outer drum 18 is mainly used for collecting drained water of the inner drum 17 and drained water of high-speed centrifugal dewatering of the inner drum 17. The inner drum 17 rotates, and preferably, lifting ribs are arranged, so that the clothes are continuously lifted, dropped and beaten, and the clothes are conveniently cleaned. The inner drum 17 is of a hole-free structure. The outer drum 18 is provided with a central installing hole for installing and fixing a bearing 12; and an inner drum shaft 13 fixedly connected with the inner drum 17 penetrates through the bearing 12 and is connected with a driving motor 16. An inner drum door 6 capable of being opened/closed is installed on a drum opening in the front portion of the inner drum 17, and therefore the inner drum 17 is of a sealed cabin structure.

A machine door 5 capable of being opened/closed is installed on the housing 19.

As shown in Figs. 1-7, the clothes lifting device for the washing machine and the drum washing machine are provided in the embodiment.

A clothes lifting device 32 for the washing machine includes:
a lifting shell 3201, which is internally provided with an open cavity;
a lifting base body 3208, which covers the open end of the lifting shell 3201 in a sealing mode to form an accommodating chamber;
an inlet water filtering portion, which is arranged on the lifting shell 3201 and/or the lifting base body 3208 to communicate with the accommodating chamber and is used for filtering inlet water of the accommodating chamber; and
a centrifugal drainage assembly, which is arranged in the accommodating chamber, wherein the initial state of the centrifugal drainage assembly is a closed state, and the centrifugal drainage assembly is opened for drainage under the action of centrifugal force.

The clothes lifting device 32 of the disclosure can be installed on the inner wall of the inner drum of the drum washing machine, and in the clothes washing process, the clothes are lifted to a certain height along with rotation of the inner drum to be beaten. In the embodiment, the centrifugal drainage assembly is integrated in the clothes lifting device 32, the initial state of the centrifugal drainage assembly is closed state, the inner drum is kept closed to independently contain washing water, and the centrifugal drainage assembly can be opened to drain water under the action of centrifugal force, so that drainage of the drum washing machine with the hole-free inner drum is achieved.

Therefore, the centrifugal drainage assembly is arranged inside the lifting device 32, clothes lifting and drainage of the drum washing machine with the hole-free inner drum are achieved, modular supply is formed, production and assembly are facilitated, and the assembly efficiency is improved.

The centrifugal drainage assembly includes the compression spring to provide pressing force to keep the closed state which is the initial state of the centrifugal drainage assembly in the present embodiment, water where the centrifugal drainage assembly is located inevitably contains clothes thread scraps, and if the thread scraps are hung on the elastic piece, the thread scraps are not prone to falling off; even though drainage water flow, centrifugal water flow and centrifugal force cannot separate thread scraps from the elastic piece. Furthermore, due to the fact that the thread scraps hung on the elastic piece have a certain length, part of the non-hung parts reach a drainage hole of the inner drum and/or the position close to the sealing plunger under the action of drainage water flow, centrifugal water flow and centrifugal force, and sealing failure is caused.

As the centrifugal drainage assembly is an important drainage part of the hole-free inner drum, whether the centrifugal drainage assembly can work normally or not determines whether the hole-free inner drum can achieve the purposes of saving water and cleaning or not. Therefore, in order to prevent attachment of the thread scraps from affecting the centrifugal drainage assembly, the clothes lifting device 32 for the washing machine of the embodiment includes a lifting shell 3201, which is internally provided with an open cavity; a lifting base body 3208, which covers the open end of the lifting shell 3201 in a sealing mode to form an accommodating chamber; and an inlet water filtering portion, which is arranged on the lifting shell 3201 and/or the lifting base body 3208 to communicate with the accommodating chamber and is used for filtering inlet water of the accommodating chamber. Thus, the accommodating chamber where the centrifugal drainage assembly is located becomes an area independent of the interior of the inner drum, the area is kept communicating with the inner drum through the water inlet filtering portion and can effectively filter the thread scraps, the centrifugal drainage assembly is located in an environment without the thread scraps or with few thread scraps, the possibility of attachment of the thread scraps is fundamentally avoided, and the working reliability of the centrifugal drainage assembly is effectively ensured.

In order to filter water entering the accommodating chamber, as one implementation mode of the embodiment, the water inlet filtering portion includes a shell water inlet filtering portion arranged on the lifting shell 3201, and the shell water inlet filtering portion includes a plurality of water filtering holes arranged in the lifting shell and communicating with the accommodating chamber. According to the embodiment, the hole diameter of the water filtering holes is small, but the number of the water filtering holes distributed in the surface of the lifting shell 3201 is large, on one hand, the water inlet and outlet flow is guaranteed, and on the other hand, the thread scraps can be effectively filtered.

As another implementation mode of the embodiment, a plurality of spraying openings 3210 are arranged in the lifting shell 3201, the water inlet filtering portion includes a shell water inlet filtering portion arranged on the lifting shell, and the shell water inlet filtering portion is a filter screen covering all the spraying openings 3210. According to the embodiment, the size and the number of the spraying openings 3210 are not limited any more, the thread scraps can be filtered through the filter screen, and the filtering effect is better. In addition, in order to more conveniently mount and dismount the filter screen, a filter screen dismounting opening is arranged in the lifting shell 3201, and a cover plate capable of being opened/closed is installed on the filter screen dismounting opening.

In order to ensure that the accommodating chamber is located in an independent area, the lifting base body 3208 is a sealing cover plate matched with the open end of the lifting shell 3201.

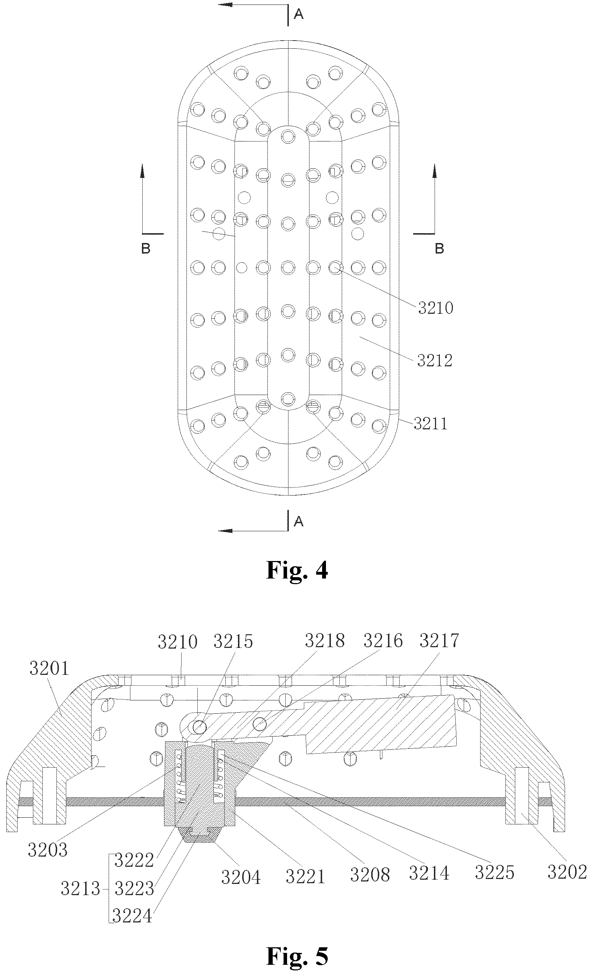

As shown in Fig. 5, the lifting base body 3208 of the embodiment is in a totally-closed state, and inlet water can only enter the accommodating chamber through the water filtering holes or the spraying openings 3210 in the lifting shell 3201.

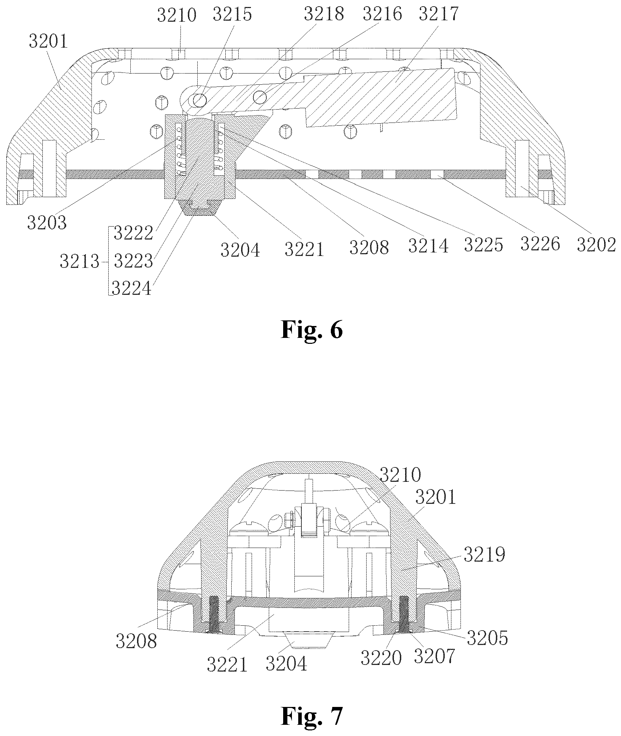

As shown in Fig. 6, the water inlet filtering portion of the embodiment includes a base body water inlet filtering portion arranged on the lifting base body 3208, and the base body water inlet filtering portion includes a plurality of base body water filtering holes 3226 which are arranged in the lifting base body 3208 and communicating with the accommodating chamber.

As another implementation mode of arranging the water inlet filtering portion on the lifting base body 3208 in the embodiment, the lifting base body 3208 is provided with a plurality of water permeable openings, the water inlet filtering portion includes a base body water inlet filtering portion arranged on the lifting base body, and the base body water inlet filtering portion is a filter screen covering all the water permeable openings. Similarly, in order to facilitate disassembly and assembly of the filter screen, a filter screen disassembly opening is arranged in the lifting shell 3201, and a cover plate capable of being opened and closed is installed on the filter screen disassembly opening.

In addition, the lifting shell 3201 includes an annular base portion 3211 and a protruding portion 3212, wherein the protruding portion 3212 and the annular base portion 3211 are integrally arranged, and the protruding portion 3212 protrudes and extends towards one side. In the embodiment, the lifting base body 3208 extends into the annular base portion 3211 and is fixedly connected with the annular base portion 3211 in the circumferential direction, and the annular base portion 3211 is provided with the water inlets 3209 so that water can enter the lifting base body 3208.

Similarly, in the embodiment, the water inlets 3209 can be designed into a plurality of water filtering holes with small hole diameters, or a filter screen is installed on the water inlets to achieve thread scrap filtering, and at the moment, the water inlet filtering portion does not need to be arranged on the lifting base body 3208 anymore.

Furthermore, the centrifugal drainage assembly includes a sealing plunger capable of moving in a reciprocating mode and an elastic piece 3203 used for elastic reset of the sealing plunger, the lifting base body 3208 is provided with a plunger base used for installing the sealing plunger, the sealing plunger is provided with a sealing portion, the plunger base is provided with a sleeve portion, and the sealing portion is arranged in the sleeve portion in a sliding and sealing mode, and the elastic piece is arranged in the sealing sleeve in a sealing mode through the sealing portion.

Further, the sealing plunger includes a sealing column 3213 and a sealing plug 3204, the sealing column 3213 includes a guide column section 3222, the sealing portion is a sealing column section 3223 arranged at one end of the guide column 3222, and the sealing plug 3204 is arranged at the end of the sealing column section 3223. The sleeve portion includes a guide sleeve 3214 and a sealing sleeve 3221, the guide column section 3222 is arranged in the guide sleeve 3214 in a reciprocating motion mode, and the sealing column section 3223 is arranged in the sealing sleeve 3221 in a sliding and sealing mode; the elastic piece 3203 is arranged in the guide sleeve 3214, one end of the elastic piece 3203 abuts against the guide sleeve 3214, and the other end of the elastic piece 3203 abuts against the guide column section 3222 or the sealing column section 3223. According to the embodiment of the disclosure, the guide column section 3222 reciprocates in the guide sleeve 3214 to drive the sealing plug 3204 to reciprocate along a determined path so as to realize the opening and closing control of the water outlet of the inner drum, and the sealing column section 3223 is arranged in the sealing sleeve 3221 in a sliding and sealing mode so as to realize the sealing of the elastic piece 3203 in the guide sleeve 3214, so that the elastic piece 3203 is prevented from being exposed and hanging the thread scraps.

Furthermore, the guide sleeve 3214 and the sealing sleeve 3221 are both cylindrical and have the same inner diameter, the guide column section 3222 and the sealing column section 3223 are both cylindrical, and the outer diameter of the guide column section 3222 is smaller than that of the sealing column section 3223. The outer diameter of the sealing column section 3223 is equal to or slightly smaller than the inner diameter of the sealing sleeve 3221.

Preferably, the guide sleeve 3214 and the sealing sleeve 3221 are integrally formed, and the guide column section 3222 and the sealing column section 3223 are integrally formed.

In addition, an inner ring matched with the guide column section 3222 is arranged in the guide sleeve 3214, the inner ring and the inner wall of the guide sleeve 3214 are arranged in a spaced mode, and an opening is arranged in the direction facing the sealing sleeve 3221 to form an installation cavity 3225 for installing the elastic piece 3203. Preferably, the elastic piece 3203 is a cylindrical spring which is arranged on the guide column section 3222 in a sleeving mode.

An installation column 3224 is arranged at the end of the sealing column section 3223, a limiting protruding ring is arranged on the installation column section 3224, the sealing plug 3204 is provided with a limiting groove with an opening, and the limiting protruding ring is installed in the limiting groove in a limited mode.

Further, the centrifugal drainage assembly includes a centrifugal piece which generates centrifugal motion under the action of centrifugal force, the centrifugal piece includes a connecting portion 3218 and a balance weight portion 3217, one end of the connecting portion 3218 is connected with the balance weight portion 3217, the other end of the connecting portion 3218 is rotatably connected with the sealing plunger 3213, and the middle of the connecting portion 3218 is rotatably installed on the plunger base to form a lever structure.

One end of the connecting portion 3218 is provided with a first connecting hole 3215 which is rotatably connected with the end portion of the sealing plunger 3213, and the middle of the connecting portion 3218 is provided with a second connecting hole 3216.

In order to achieve fixed connection between the lifting shell 3201 and the lifting base body 3208, the lifting base body 3208 is provided with a base body fixing column 3205, a connecting rib 3219 extending towards the open end is arranged in the open cavity of the lifting body 3201, and the base body fixing column 3205 is fixedly connected with the connecting rib 3219.

Preferably, the centrifugal drainage assembly is arranged in the middle of the lifting base body 3208, and the at least two base body fixing columns 3205 are symmetrically arranged on the two sides of the centrifugal drainage assembly.

Furthermore, the base body fixing column 3205 and the connecting rib 3219 are clamped and positioned through a clamping structure, and the base body fixing column 3205 and the connecting rib 3219 are fixedly connected through a connecting piece 3207 after being positioned.

Preferably, the connecting rib 3219 is provided with a clamping protrusion, the base body fixing column 3205 is provided with a channel for the connecting rib to stretch in, and the peripheral wall of the channel is provided with a clamping groove connected with the clamping protrusion in a matched and clamped mode.

The connecting rib 3219 is provided with a connecting hole, the base body fixing column 3205 is provided with a positioning hole opposite to the connecting hole, the connecting piece 3207 penetrates through the positioning hole to be fixedly connected with the connecting hole, and preferably, the connecting piece 3207 is a connecting screw.

In order to achieve the purpose that the lifting device is installed in the inner drum, shell fixing columns 3202 used for fixedly assembling the lifting device are arranged at the two ends of an opening of the lifting shell 3201 respectively, the positions, corresponding to the shell fixing columns 3202, of the lifting base body 3208 are arranged in an avoiding mode, and the shell fixing columns 3202 enable the structure, installed in the inner drum, of the lifting device to be unchanged. The learning cost of assembly is reduced, and the assembly efficiency is improved.

As shown in Fig. 1, the embodiment of the disclosure also provides a drum washing machine with the clothes lifting device for the washing machine, including:
an inner drum 17; and
an inner drum door 6, which is installed on a drum opening of the inner drum 17 in an opened/closed mode;
when the inner drum door 6 is closed, the inner drum door 6 and the inner drum 17 jointly form an independent washing cavity, and washing water is independently contained when clothes are washed; and
a water outlet is arranged in the side wall of the inner drum 17, the lifting device 32 is installed on the water outlet in the inner wall of the inner drum 17, and the centrifugal water drainage assembly blocks and closes the water outlet.

According to the drum washing machine, the inner drum door 6 is installed on the drum opening of the inner drum 17, the inner drum 17 adopts the hole-free drum design, the inner drum door 6 and the inner drum 17 jointly form the independent washing cavity, washing water is independently contained when clothes are washed, and the space between the inner drum and the outer drum does not need to be filled with washing/rinsing water, so that the washing water consumption of the washing machine is greatly reduced; the possibility of dirt adhesion between the inner drum and the outer drum is avoided; the user health and the user experience are greatly improved, and water resources are greatly saved.

Furthermore, a fixing hole used for fixedly assembling the lifting device 32 is arranged in the side wall of the inner drum 17, the lifting device 32 is fixed to the fixing hole in a sealed mode through a connecting piece, the inner drum 17 is kept closed through sealed connection, and the purpose of independently containing washing water is achieved.

According to the control method of the drum washing machine, the washing machine includes an inner drum, washing water is contained in the inner drum when clothes are washed, a drainage hole is arranged in the side wall of the inner drum, and a lifting device for controlling the drainage hole to be switched on or switched off is installed on the drainage hole. And the control method includes the steps that in the clothes washing process of the washing machine, the rotation speed of the inner drum is controlled to reach or exceed the set rotation speed N0; a centrifugal drainage assembly of the lifting device opens the drainage hole under centrifugal force for inner drum drainage.

The drainage device is provided with the centrifugal drainage assembly in the present embodiment, according to the control method, the centrifugal drainage assembly is opened to achieve drainage by controlling the inner drum to rotate to generate centrifugal force, and drainage and dewatering of the drum washing machine with the hole-free inner drum are achieved in the mode of the centrifugal drainage assembly and program control.

As an implementation mode of the embodiment, after the washing machine executes a washing program or a rinsing program, the rotating speed of the inner drum is controlled to reach a first rotating speed N1 and is maintained for a set time t1, N1 is larger than or equal to N0, and N0 is larger than the rotating speed of the inner drum in the washing program or the rinsing program; when the rotating speed N1 of the inner drum is kept and the rotating time reaches t1, the inner drum is controlled to stop rotating and enter the next procedure.

Preferably, N1 is 110-400 revolutions per minute, more preferably, 170 +/-50 revolutions per minute, and further preferably, 150 +/-20 revolutions per minute; and
preferably, the range of t1 is between 0.1 and 5 minutes, and more preferably, the range of t1 is between 1 and 2 minutes.

Further, the washing machine includes a weighing device used for weighing the weight in the inner drum, the weighing device detects the weight WO in the inner drum before the inner drum starts to rotate at N1, the weighing device detects the weight W1 in the inner drum after the rotation time reaches t1, and the control system judges whether drainage is normal or not according to comparison between W1 and WO.

Furthermore, the control system judges whether drainage is abnormal or not by comparing the value k of W1/WO, if k is larger than or equal to 0.7, the control system judges that drainage is abnormal and gives an alarm, and if not, drainage is normal.

As another implementation mode of the embodiment, after the washing machine executes the washing program or the rinsing program, the rotating speed of the inner drum is controlled to reach the first rotating speed N1, N1 is larger than or equal to N0, and N0 is larger than the rotating speed of the inner drum in the washing program or the rinsing program; and after the water in the inner drum is completely drained, the inner drum is controlled to stop rotating to enter the next procedure.

Further, the washing machine includes a weighing device used for weighing the weight in the inner drum, and in the process that the washing machine controls the inner drum to rotate at N1, the control system judges whether drainage is completed or not according to the weight value, detected by the weighing device in real time, in the inner drum.

Further, the step that the control system judges whether drainage is completed or not according to the weight value, detected by the weighing device in real time, in the inner drum includes:
the weighing device detects weight values WO, W1, W2,..., Wt in the inner drum in real time;
the difference between the weighing values of the adjacent time is calculated, and n1 = W1-WO, n2 = W2-W1,..., nt = (Wt)-(Wt-1) are recorded; and
when nt is kept unchanged and tends to 0 within a certain period of time, drainage is completed.

Furthermore, the control system judges whether drainage is normal or not by comparing the change conditions of n1, n2,... and nt, and if n1 = n2 =... = nt = 0, the control system judges that drainage is abnormal and gives an alarm.

Further, the washing machine executes a dewatering program, and the lowest dewatering rotating speed N2 in the dewatering program is larger than or equal to N0.

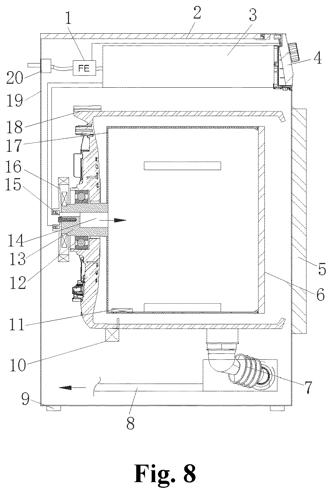

The embodiment of the disclosure mainly solves the problem of how to accurately determine the water inflow of the drum washing machine with the hole-free inner drum, and the specific solution is as follows:
as shown in Fig. 8, the drum washing machine includes an inner drum 17 and a water inlet pipeline communicating with the inner drum 17, the inner drum 17 is a hole-free inner drum and contains washing water when clothes are washed, and a flow sensor 1 used for detecting the water inlet flow is arranged on the water inlet pipeline.

According to the embodiment, the flow sensor 1 is arranged on the water inlet pipeline to monitor the water inlet flow, when the set water inlet amount is reached, the water inlet valve 20 is closed, and water inlet is completed. According to the embodiment, the flow sensor is adopted to solve the water inlet problem of the drum washing machine with the hole-free inner drum according to the set water level, the washing effect is ensured, the structure is simple, and control is convenient.

Further, the drum washing machine includes a water inlet valve 20 and a detergent box 3, the water inlet pipeline includes a first water inlet pipe and a second water inlet pipe, the outlet end of the water inlet valve 20 communicates with the detergent box 3 through the first water inlet pipe, and the outlet end of the detergent box 3 communicates with the inner drum 17 through the second water inlet pipe, and the flow sensor 1 is arranged on the first water inlet pipe or the second water inlet pipe.

Preferably, the flow sensor 1 is arranged on the first water inlet pipe, so that the detergent in the detergent box can be prevented from entering the flow sensor 1.

The drum washing machine includes a main controller 4, and the flow sensor 1 is electrically connected with the main controller 4 through a circuit. The main controller 4 can collect the water inlet amount of the inner drum 17 in real time, and the water inlet valve 20 is closed when the set water inlet amount is reached.

As an implementation mode of the embodiment, the flow sensor 1 is a rotor flow sensor, or a turbine flow sensor, or an ultrasonic flow sensor, or an electromagnetic flow sensor, or a pore plate flow sensor.

According to the embodiment, a flow sensor 1 can be arranged at any position of a water inlet pipeline, preferably, the flow sensor 1 is arranged at the rear portion of a water inlet valve 20 to accurately meter the flow of water entering the sealed inner drum 17, the flow sensor 1 is connected with the main controller 4 through a circuit, and the main controller 4 can collect the water inlet amount of the inner drum 17 in real time, so that the water inlet valve 20 is closed when the set water inlet amount is reached.

In order to feed water into the hole-free inner drum, the drum washing machine includes a driving motor 16 and an inner drum shaft 13, the driving motor 16 is in transmission connection with the inner drum 17 through the inner drum shaft 13 to drive the inner drum 17 to rotate, a hollow channel 14 communicating with the interior of the inner drum 17 is arranged in the inner drum shaft 13, and the water inlet pipeline communicates with the hollow channel of the inner drum shaft 13.

Specifically, the inner drum shaft 13 is connected with a driving motor 16, the driving motor 16 includes a stator and a rotor, and the rotor is fixedly connected with the inner drum shaft 13; a through hole is arranged in the center of the rotor, and the water inlet pipeline penetrates through the through hole of the rotor to communicate with the hollow channel 14 of the inner drum shaft 13.

Furthermore, a first dynamic sealing structure 15 is arranged between the water inlet pipeline and the through hole of the rotor, and a second sealing structure is arranged between the through hole of the rotor and the hollow channel 14 of the inner drum shaft 13.

In order to achieve drainage of the hole-free inner drum, the drum washing machine includes an outer drum 18, an inner drum drainage hole is arranged in the side wall of the inner drum 17, a normally-closed one-way valve plug 11 is installed in the inner drum drainage hole, and an ejector rod mechanism 10 used for ejecting the one-way valve plug 11 open for drainage is installed on the outer drum 18.

As an implementation mode of the embodiment, a locking mechanism used for locking rotation of the inner drum 17 is further arranged on the outer drum 18, and after the locking mechanism locks the inner drum, the ejector rod mechanism 10 ejects the one-way valve plug 11 open for drainage.

As another implementation mode of the embodiment, a plurality of dewatering holes are arranged in the side wall of the inner drum 17, centrifugal valves are installed on the dewatering holes, the inner drum is controlled to reach a certain rotating speed, and the centrifugal valves are opened under the action of dewatering centrifugal force to conduct washing drainage or dewatering drainage.

The embodiment of the disclosure also provides a control method of the drum washing machine, the washing machine executes a washing/rinsing program, in the water inlet process, the flow sensor detects the water inlet flow value in real time, the washing machine calculates the water inlet amount according to the water inlet flow value and the water inlet time, and water inlet is stopped when the water inlet amount reaches the set water inlet amount of the washing machine.

The drum washing machine is provided with a plurality of water inlet flow values which can be selected by a user, and water is fed into the washing machine according to the water inlet flow value selected by the user.

The drum washing machine has a clothes weighing function, and water can be fed by determining the water inlet flow value according to the weight of clothes.

The above embodiments can be implemented independently and can also be implemented in a combined mode.
Although the present disclosure has been disclosed as above in the preferred embodiments, the preferred embodiments are not intended to limit the present disclosure. Any technician familiar with this patent can use the technical contents suggested above to make slight changes or modifications without departing from the claims.

## Claims

1. A clothes lifting device for a washing machine having an imperforated inner drum, the clothes lifting device comprising:
a lifting shell (3201) being internally provided with an open cavity;
a lifting base body (3208) being configured to cover an open end of the open cavity of the lifting shell (3201) in a sealing mode to form an accommodating chamber;
an inlet water filtering portion being arranged on the lifting shell (3201) and/or the lifting base body (3208) communicating with the accommodating chamber and configured to filter inlet water of the accommodating chamber; and
a centrifugal drainage assembly is arranged in the accommodating chamber, said centrifugal drainage assembly being configured in an initial state of the centrifugal drainage assembly to be closed and to open for drainage under an action of centrifugal force;
**characterized in that**,
a plurality of spraying openings (3210) are arranged in the lifting shell (3201), and
the water inlet filtering portion includes a base body water inlet filtering portion arranged on the lifting base body (3208), said the base body water inlet filtering portion including a plurality of base body water filtering holes (3226) which are arranged in the lifting base body (3208) and communicating with the accommodating chamber.

2. The clothes lifting device for the washing machine according to claim 1, wherein the water inlet filtering portion includes a shell water inlet filtering portion arranged on the lifting shell (3201), and the shell water inlet filtering portion includes a plurality of water filtering holes arranged in the lifting shell (3201) and communicating with the accommodating chamber.

3. The clothes lifting device for the washing machine according to claim 1, wherein the lifting base body (3208) is a sealing cover plate matched with the open end of the open cavity of the lifting shell (3201).

4. The clothes lifting device for the washing machine according to any one of claims 1-3, wherein the lifting base body (3208) is provided with a plurality of water permeable openings, the water inlet filtering portion includes a base body water inlet filtering portion arranged on the lifting base body (3208), and the base body water inlet filtering portion is a filter screen covering the water permeable openings.

5. The clothes lifting device for the washing machine according to any one of claims 1-4, wherein the centrifugal drainage assembly includes a sealing plunger (3213) capable of moving in a reciprocating mode and an elastic piece (3203) used for elastic reset of the sealing plunger (3213), the lifting base body (3208) is provided with a plunger base used for installing the sealing plunger (3213), the sealing plunger (3213) is provided with a sealing portion, the plunger base is provided with a sleeve portion, and the sealing portion is arranged in the sleeve portion in a sliding and sealing mode, and the elastic piece (3203) is arranged in the sealing sleeve (3221) in a sealing mode through the sealing portion.

6. The clothes lifting device for the washing machine according to claim 5, wherein the sealing plunger (3213) includes a sealing column (3213) and a sealing plug (3204), the sealing column (3213) includes a guide column section (3222), the sealing portion is a sealing column section (3223) arranged at an end of the guide column, and the sealing plug (3204) is arranged at an end of the sealing column section (3223); the sleeve portion includes a guide sleeve (3214) and a sealing sleeve (3221), the guide column section (3222) is arranged in the guide sleeve (3214) in a reciprocating motion mode, and the sealing column section (3223) is arranged in the sealing sleeve (3221) in a sliding and sealing mode; the elastic piece (3203) is arranged in the guide sleeve (3214), one end of the elastic piece (3203) abuts against the guide sleeve (3214), and another end of the elastic piece (3203) abuts against the guide column section (3222) or the sealing column section (3223),

7. The clothes lifting device for the washing machine according to claim 6, wherein the guide sleeve (3214) and the sealing sleeve (3221) are both cylindrical and have same inner diameter, the guide column section (3222) and the sealing column section (3223) are both cylindrical, and an outer diameter of the guide column section (3222) is smaller than that of the sealing column section (3223), an outer diameter of the sealing column section (3223) is equal to or slightly smaller than an inner diameter of the sealing sleeve (3221);

8. The clothes lifting device for the washing machine according to claim 7, wherein the guide sleeve (3214) and the sealing sleeve (3221) are integrally formed, and the guide column section (3222) and the sealing column section (3223) are integrally formed.

9. The clothes lifting device for the washing machine according to one of claim 5 to 8, wherein the centrifugal drainage assembly comprises a centrifugal piece which generates centrifugal motion under an action of centrifugal force, the centrifugal piece comprises a connecting portion (3218) and a balance weight portion (3217), one end of the connecting portion (3218) is connected with the balance weight portion (3217), another end of the connecting portion (3218) is rotatably connected with the sealing plunger (3213), and a middle of the connecting portion (3218) is rotatably mounted on the plunger base to form a lever structure; and
preferably, the connecting portion (3218) is a connecting rod, the balance weight portion (3217) is a balance weight block, the plunger base is provided with an extending portion extending towards the balance weight portion (3217), and a middle of the connecting rod is rotatably connected with the extending portion through a rotating shaft.

10. A drum washing machine with the clothes lifting device for the washing machine according to any one of the claims 1 to 9, comprising:
an imperforated inner drum (17);
an inner drum door being configured to install on a drum opening of the inner drum (17) in an opened/closed mode; wherein
when the inner drum door is closed, the inner drum door and the inner drum (17) jointly form an independent washing chamber, and washing water is independently contained when clothes are washed; and
a water outlet is arranged in a side wall of the inner drum (17), the lifting device is installed on the water outlet in the inner wall of the inner drum (17), and the centrifugal water drainage assembly blocks and closes the water outlet.

## Patentansprüche

1. Wäschehebevorrichtung für eine Waschmaschine mit einer unperforierten inneren Trommel, wobei die Wäschehebevorrichtung umfasst:
eine Hebeschale (3201), die im Inneren mit einem offenen Hohlraum versehen ist;
einen Hebebasiskörper (3208), der dazu konfiguriert ist, ein offenes Ende des offenen Hohlraums der Hebeschale (3201) in einem Dichtungsmodus abzudecken, um eine Aufnahmekammer zu bilden;
einen Einlasswasserfilterungsabschnitt, der an der Hebeschale (3201) und/oder dem Hebebasiskörper (3208) angeordnet ist und mit der Aufnahmekammer in Verbindung steht und dazu konfiguriert ist, das Einlasswasser der Aufnahmekammer zu filtern; und
eine Zentrifugalablassanordnung, die in der Aufnahmekammer angeordnet ist, wobei die Zentrifugalablassanordnung dazu konfiguriert ist, in einem Anfangszustand der Zentrifugalablassanordnung geschlossen zu sein und sich zum Ablassen unter einer Wirkung der Zentrifugalkraft zu öffnen;
**dadurch gekennzeichnet, dass**
eine Vielzahl von Sprühöffnungen (3210) in der Hebeschale (3201) angeordnet sind, und
der Wassereinlassfilterungsabschnitt einen Basiskörper-Wassereinlassfilterungsabschnitt enthält, der an dem Hebebasiskörper (3208) angeordnet ist, wobei der Basiskörper-Wassereinlassfilterungsabschnitt eine Vielzahl von Basiskörper-Wasserfilterungslöchern (3226) enthält, die in dem Hebebasiskörper (3208) angeordnet sind und mit der Aufnahmekammer in Verbindung stehen.

2. Wäschehebevorrichtung für die Waschmaschine nach Anspruch 1, wobei der Wassereinlassfilterungsabschnitt einen Schalenwassereinlassfilterungsabschnitt umfasst, der an der Hebeschale (3201) angeordnet ist, und der Schalenwassereinlassfilterungsabschnitt eine Vielzahl von Wasserfilterungslöchern umfasst, die in der Hebeschale (3201) angeordnet sind und mit der Aufnahmekammer in Verbindung stehen.

3. Wäschehebevorrichtung für die Waschmaschine nach Anspruch 1, wobei der Hebebasiskörper (3208) eine dichtende Abdeckplatte ist, die an das offene Ende des offenen Hohlraums der Hebeschale (3201) angepasst ist.

4. Wäschehebevorrichtung für die Waschmaschine nach einem der Ansprüche 1 bis 3, wobei der Hebebasiskörper (3208) mit einer Vielzahl von wasserdurchlässigen Öffnungen versehen ist, der Wassereinlassfilterungsabschnitt einen Basiskörper-Wassereinlassfilterungsabschnitt enthält, der auf dem Hebebasiskörper (3208) angeordnet ist, und der Basiskörper-Wassereinlassfilterungsabschnitt ein Filtersieb ist, das die wasserdurchlässigen Öffnungen abdeckt.

5. Wäschehebevorrichtung für die Waschmaschine nach einem der Ansprüche 1 bis 4, wobei die Zentrifugalablassanordung einen Dichtungsstößel (3213) enthält, der dazu in der Lage ist, sich in einem Hin- und Herbewegungsmodus zu bewegen, und ein elastisches Stück (3203), das zum elastischen Zurückstellen des Dichtungsstößels (3213) verwendet wird, wobei der Hebebasiskörper (3208) mit einer Stößelbasis versehen ist, die zum Installieren des Dichtungsstößels (3213) verwendet wird, der Dichtungsstößel (3213) mit einem Dichtungsabschnitt versehen ist, die Stößelbasis mit einem Hülsenabschnitt versehen ist, und der Dichtungsabschnitt in dem Hülsenabschnitt in einem Gleit- und Dichtungsmodus angeordnet ist, und das elastische Stück (3203) in der Dichtungshülse (3221) in einem Dichtungsmodus durch den Dichtungsabschnitt angeordnet ist.

6. Wäschehebevorrichtung für die Waschmaschine nach Anspruch 5, wobei der Dichtungsstößel (3213) eine Dichtungssäule (3213) und einen Dichtungsstopfen (3204) enthält, die Dichtungssäule (3213) einen Führungssäulenabschnitt (3222) enthält, der Dichtungsabschnitt ein an einem Ende der Führungssäule angeordneter Dichtungssäulenabschnitt (3223) ist, und der Dichtungsstopfen (3204) an einem Ende des Dichtungssäulenabschnitts (3223) angeordnet ist; der Hülsenabschnitt eine Führungshülse (3214) und eine Dichtungshülse (3221) enthält, wobei der Führungssäulenabschnitt (3222) in der Führungshülse (3214) in einem Hin- und Herbewegungsmodus angeordnet ist und der Dichtungssäulenabschnitt (3223) in der Dichtungshülse (3221) in einem Gleit- und Dichtungsmodus angeordnet ist; das elastische Stück (3203) in der Führungshülse (3214) angeordnet ist, ein Ende des elastischen Stücks (3203) an der Führungshülse (3214) anliegt, und ein anderes Ende des elastischen Stücks (3203) an dem Führungssäulenabschnitt (3222) oder dem Dichtungssäulenabschnitt (3223) anliegt.

7. Wäschehebevorrichtung für die Waschmaschine nach Anspruch 6, wobei die Führungshülse (3214) und die Dichtungshülse (3221) beide zylindrisch sind und denselben Innendurchmesser haben, der Führungssäulenabschnitt (3222) und der Dichtungssäulenabschnitt (3223) beide zylindrisch sind und ein Außendurchmesser des Führungssäulenabschnitts (3222) kleiner ist als der des Dichtungssäulenabschnitts (3223), ein Außendurchmesser des Dichtungssäulenabschnitts (3223) gleich oder geringfügig kleiner ist als ein Innendurchmesser der Dichtungshülse (3221).

8. Wäschehebevorrichtung für die Waschmaschine nach Anspruch 7, wobei die Führungshülse (3214) und die Dichtungshülse (3221) einstückig ausgebildet sind und der Führungssäulenabschnitt (3222) und der Dichtungssäulenabschnitt (3223) einstückig ausgebildet sind.

9. Wäschehebevorrichtung für die Waschmaschine nach einem der Ansprüche 5 bis 8, wobei die Zentrifugalablassanordung ein Zentrifugalstück umfasst, das unter einer Wirkung der Zentrifugalkraft eine Zentrifugalbewegung erzeugt, wobei das Zentrifugalstück einen Verbindungsabschnitt (3218) und einen Ausgleichsgewichtabschnitt (3217) umfasst, ein Ende des Verbindungsabschnitts (3218) mit dem Ausgleichsgewichtsabschnitt (3217) verbunden ist, ein anderes Ende des Verbindungsabschnitts (3218) drehbar mit dem Dichtungsstößel (3213) verbunden ist, und eine Mitte des Verbindungsabschnitts (3218) drehbar an der Stößelbasis montiert ist, um eine Hebelstruktur zu bilden; und
wobei der Verbindungsabschnitt (3218) vorzugsweise eine Verbindungsstange ist, der Ausgleichsgewichtsabschnitt (3217) ein Ausgleichsgewichtsblock ist, die Stößelbasis mit einem Verlängerungsabschnitt versehen ist, der sich in Richtung des Ausgleichsgewichtsabschnitts (3217) erstreckt, und eine Mitte der Verbindungsstange drehbar mit dem Verlängerungsabschnitt durch eine Drehwelle verbunden ist.

10. Trommelwaschmaschine mit der Wäschehebevorrichtung für die Waschmaschine nach einem der Ansprüche 1 bis 9, umfassend:
eine unperforierte innere Trommel (17);
eine Tür der inneren Trommel, die dazu konfiguriert ist, an einer Trommelöffnung der inneren Trommel (17) in einem geöffneten/geschlossenen Modus installiert zu werden; wobei
wenn die Tür der inneren Trommel geschlossen ist, die Tür der inneren Trommel und die innere Trommel (17) gemeinsam eine unabhängige Waschkammer bilden, und das Waschwasser beim Waschen der Wäsche unabhängig enthalten wird; und
ein Wasserauslass in einer Seitenwand der inneren Trommel (17) angeordnet ist, die Hebevorrichtung an dem Wasserauslass in der Innenwand der inneren Trommel (17) installiert ist und die Zentrifugalwasserablassanordnung den Wasserauslass blockiert und verschließt.

## Revendications

1. Dispositif de levage de vêtements pour machine à laver comportant un tambour intérieur non perforé, le dispositif de levage de vêtements comprenant:
une coque de levage (3201) étant pourvue intérieurement d'une cavité ouverte;
un corps de base de levage (3208) étant configuré pour recouvrir une extrémité ouverte de la cavité ouverte de la coque de levage (3201) en mode d'étanchéité pour former une chambre de logement;
une partie de filtrage d'eau d'entrée étant disposée sur la coque de levage (3201) et/ou le corps de base de levage (3208) communiquant avec la chambre de logement et configurée pour filtrer l'eau d'entrée de la chambre de logement; et
un ensemble de drainage centrifuge est disposé dans la chambre de logement, ledit ensemble de drainage centrifuge étant configuré selon un état initial de l'ensemble de drainage centrifuge pour être fermé et s'ouvrir pour le drainage sous l'action d'une force centrifuge;
**caractérisé en ce que**,
une pluralité d'ouvertures de pulvérisation (3210) sont disposées dans la coque de levage (3201), et
la partie de filtrage d'entrée d'eau comprend une partie de filtrage d'entrée d'eau de corps de base disposée sur le corps de base de levage (3208), ladite partie de filtrage d'entrée d'eau de corps de base comprenant une pluralité de trous de filtrage d'eau de corps de base (3226) qui sont disposés dans le corps de base de levage (3208) et communiquant avec la chambre de logement.

2. Dispositif de levage de vêtements pour machine à laver selon la revendication 1, dans lequel la partie de filtrage d'entrée d'eau comprend une partie de filtrage d'entrée d'eau de coque disposée sur la coque de levage (3201), et la partie de filtrage d'entrée d'eau de coque comprend une pluralité de trous de filtrage d'eau disposés dans la coque de levage (3201) et communiquant avec la chambre de logement.

3. Dispositif de levage de vêtements pour machine à laver selon la revendication 1, dans lequel le corps de la base de levage (3208) est une plaque de couverture d'étanchéité adaptée à l'extrémité ouverte de la cavité ouverte de la coque de levage (3201).

4. Dispositif de levage de vêtements pour machine à laver selon l'une quelconque des revendications 1 à 3, dans lequel le corps de base de levage (3208) est pourvu d'une pluralité d'ouvertures perméables à l'eau, la partie de filtrage d'entrée d'eau comprend une partie de filtrage d'entrée d'eau de corps de base disposée sur le corps de base de levage (3208), et la partie de filtrage d'entrée d'eau de corps de base est un écran filtrant recouvrant les ouvertures perméables à l'eau.

5. Dispositif de levage de vêtements pour machine à laver selon l'une quelconque des revendications 1 à 4, dans lequel l'ensemble de drainage centrifuge comprend un piston d'étanchéité (3213) pouvant se déplacer selon un mode alternatif et une pièce élastique (3203) utilisée pour la réinitialisation élastique du piston d'étanchéité (3213), le corps de base de levage (3208) est pourvu d'une base de piston utilisée pour l'installation du piston d'étanchéité (3213), le piston d'étanchéité (3213) est pourvu d'une partie d'étanchéité, la base du piston est pourvue d'une partie manchon, et la partie d'étanchéité est disposée dans la partie manchon selon un mode coulissant et d'étanchéité, et la pièce élastique (3203) est disposée dans le manchon d'étanchéité (3221) selon un mode d'étanchéité à travers la partie d'étanchéité.

6. Dispositif de levage de vêtements pour machine à laver selon la revendication 5, dans lequel le piston d'étanchéité (3213) comprend une colonne d'étanchéité (3213) et un bouchon d'étanchéité (3204), la colonne d'étanchéité (3213) comprend une section de colonne de guidage (3222), la partie d'étanchéité est une section de colonne d'étanchéité (3223) disposée au niveau d'une extrémité de la colonne de guidage, et le bouchon d'étanchéité (3204) est disposé au niveau d'une extrémité de la section de colonne d'étanchéité (3223); la partie manchon comprend un manchon de guidage (3214) et un manchon d'étanchéité (3221), la section de colonne de guidage (3222) est disposée dans le manchon de guidage (3214) selon un mode de mouvement alternatif, et la section de colonne d'étanchéité (3223) est disposé dans le manchon d'étanchéité (3221) selon un mode coulissant et d'étanchéité; la pièce élastique (3203) est disposée dans le manchon de guidage (3214), une extrémité de la pièce élastique (3203) vient en butée contre le manchon de guidage (3214), et une autre extrémité de la pièce élastique (3203) vient en butée contre la section de colonne de guidage (3222) ou la section de colonne d'étanchéité (3223),

7. Dispositif de levage de vêtements pour machine à laver selon la revendication 6, dans lequel le manchon de guidage (3214) et le manchon d'étanchéité (3221) sont tous deux cylindriques et ont le même diamètre intérieur, la section de colonne de guidage (3222) et la section de colonne d'étanchéité (3223) sont toutes deux cylindriques, et un diamètre extérieur de la section de colonne de guidage (3222) est inférieur à celui de la section de la colonne d'étanchéité (3223), un diamètre extérieur de la section de colonne d'étanchéité (3223) est égal ou légèrement inférieur à un diamètre intérieur du manchon d'étanchéité (3221);

8. Dispositif de levage de vêtements pour machine à laver selon la revendication 7, dans lequel le manchon de guidage (3214) et le manchon d'étanchéité (3221) sont formés d'un seul tenant, et la section de colonne de guidage (3222) et la section de colonne d'étanchéité (3223) sont formées d'un seul tenant.

9. Dispositif de levage de vêtements pour machine à laver selon l'une des revendications 5 à 8, dans lequel l'ensemble de drainage centrifuge comprend une pièce centrifuge qui génère un mouvement centrifuge sous l'action d'une force centrifuge, la pièce centrifuge comprend une partie de connexion (3218) et une partie de contrepoids (3217), une extrémité de la partie de connexion (3218) est reliée à la partie de contrepoids (3217), une autre extrémité de la partie de connexion (3218) est reliée de manière rotative au piston d'étanchéité (3213), et un milieu de la partie de connexion (3218) est monté de manière rotative sur la base du piston pour former une structure de levier; et
de préférence, la partie de connexion (3218) est une bielle, la partie de contrepoids (3217) est un bloc de contrepoids, la base du piston est pourvue d'une partie d'extension s'étendant vers la partie de contrepoids (3217), et un milieu de la bielle est relié de manière rotative à la partie d'extension par l'intermédiaire d'un arbre rotatif.

10. Machine à laver à tambour doté du dispositif de levage de vêtements pour machine à laver selon l'une quelconque des revendications 1 à 9, comprenant:
un tambour intérieur non perforé (17) ;
une porte de tambour intérieur configurée pour être installée sur une ouverture de tambour du tambour intérieur (17) selon un mode ouvert/fermé; dans lequel
lorsque la porte du tambour intérieur est fermée, la porte du tambour intérieur et le tambour intérieur (17) forment ensemble une chambre de lavage indépendante, et l'eau de lavage est contenue indépendamment lorsque les vêtements sont lavés; et
une sortie d'eau est disposée dans une paroi latérale du tambour intérieur (17), le dispositif de levage est installé sur la sortie d'eau dans la paroi intérieure du tambour intérieur (17), et l'ensemble de drainage d'eau centrifuge bloque et ferme la sortie d'eau.
